# EUROPÄISCHE PATENTSCHRIFT

(11) **EP 1 422 586 B1**
(45) Veröffentlichungstag und Bekanntmachung des Hinweises auf die Patenterteilung: **11.10.2006**
(21) Anmeldenummer: 03024803.3
(22) Anmeldetag: 30.10.2003
(51) Int. Cl.: G05D 1/02, G08B 21/06, G08G 1/16

(54) **Verfahren und Vorrichtung zur Überwachung eines Kraftfahrers unter Verwendung einer Fahrspurerkennung**
Method and device to monitor a car driver by using lane recognition
Procédé et appareil de surveillance d'un conducteur de voiture au moyen d'une reconnaissance de voie

(30) Priorität: 20.11.2002 DE 10254247
(43) Veröffentlichungstag der Anmeldung: 26.05.2004
(73) Patentinhaber: Volkswagen Aktiengesellschaft, 38436 Wolfsburg (DE)
(72) Erfinder: Lienkamp, Markus, Dr., 38108 Braunschweig (DE); Nuber, Heike, 91171 Greding (DE); Henze, Roman, 38106 Braunschweig (DE); Gödecke, Axel, 31234 Edemissen (DE); Haney, Dirk, 38106 Braunschweig (DE)
(74) Vertreter: Meyer, Enno

(56) Entgegenhaltungen:
- EP-A- 1 087 360
- DE-A1- 4 338 244
- DE-A1- 19 602 766
- DE-A1- 19 720 626
- GB-A- 2 320 972
- US-B1- 6 226 592

## Beschreibung

Die Erfindung betrifft ein Verfahren und eine Vorrichtung zur Überwachung eines Kraftfahrzeugführers unter Verwendung einer Fahrspurerkennung eines Kraftfahrzeugs gemäß dem Oberbegriff des Anspruchs 1.

Verfahren und Vorrichtungen zur Fahrspurerkennung, bei denen die Fahrspur sowie die Position und der Fahrverlauf des Kraftfahrzeugs relativ zur Fahrspur, auf der sich das Kraftfahrzeug befindet, anhand der Fahrspurmarkierungen bestimmt, werden zur Unterstützung des Fahrers in Fahrerassistenzsystemen eingesetzt. Der Zweck liegt dabei in der Vermeidung von Unfällen, wie sie durch eine Übermüdung, Ablenkung oder Unaufmerksamkeit des Fahrers bedingt werden können, wobei der Fahrer aufgrund seiner Übermüdung plötzlich die aktuelle Fahrspur verläßt.

Um die Fahrspur zu erkennen, werden unterschiedliche Sensorsysteme verwendet, die die vor dem Kraftfahrzeug befindliche Fahrspur abtasten, d.h. vermessen, und aus den gemessenen Rohdaten über einen geeigneten Algorithmus die Fahrbahnmarkierungen und die relative Lage des Kraftfahrzeugs zu den Markierungen bestimmen. Bei einem Abweichen der ausgewerteten Daten von vorgegebenen Solldaten, d.h. mit dem Vorliegen einer kritischen Verkehrssituation, erfolgt eine Warnung an den Fahrer.

So wird in der DE 196 26 292 A1 Infrarotlicht im Pulsbetrieb auf die Fahrbahn gestrahlt und aus der gemessenen Reflexion die Fahrbahnmarkierungen ermittelt.

Demgegenüber wird in der EP 0 837 378 eine Bildaufnahmevorrichtung, beispielsweise eine Film- oder Videokamera verwendet, die in vorgegebenen periodischen Abständen ein Bild der vor dem Fahrzeug liegenden Fahrbahn aufnimmt. Mittels Bildverarbeitungsalgorithmen werden aus den Daten die Fahrbahn bzw. die Fahrbahnmarkierungen extrahiert und damit die Fahrspur bestimmt.

Ferner ist aus der DE 101 51 015.2 eine Vorrichtung zur Aufmerksamkeitskontrolle eines Kraftfahrzeugführers bekannt, die mindestens einen Sensor zur Erfassung von Fahrbetriebsparametern und eine weitere Einrichtung zur Erfassung des Aufmerksamkeitszustands des Fahrzeugführers umfaßt, wobei letztere Einrichtung beispielsweise durch eine Fahrspurerkennungsvorrichtung gebildet sein kann. Stellt die Fahrspurerkennung eine unbeabsichtigte Abweichung von der Fahrspur fest, so wird ein Warnsignal an den Fahrer abgegeben.

Ähnliche Vorrichtungen und Verfahren sind aus der DE 196 02 766 A1 und der DE 4338244 A1 bekannt, gegen die der unabhangige Anspruch 1 abgegrenzt ist.

Nachteilig bei den bekannten System ist, daß in der Praxis relativ viele Fehlwarnungen an den Fahrer auftreten, wodurch die Glaubwürdigkeit und damit die Akzeptanz des Systems seitens des Fahrers in Frage gestellt wird.

Der Erfindung liegt daher die Aufgabe zugrunde, die Anzahl der Fehlmeldungen an den Fahrer bei einem gattungsgemäßen System zu verringern.

Die Aufgabe wird durch ein Verfahren und eine Vorrichtung zur Überwachung eines Kraftfahrzeugführers unter Verwendung einer Fahrspurerkennung nach Anspruch 1 bzw. Anspruch 14 gelöst. Bevorzugte Ausgestaltungen der Erfindung sind Gegenstand der Unteransprüche.

Bei dem erfindungsgemäßen Verfahren zur Überwachung eines Kraftfahrzeugführers unter Verwendung einer Fahrspurerkennung wird eine Warnung an den Kraftfahrzeugführer ausgegeben, wenn eine kritische Fahrsituation detektiert wird, und es wird die Aktivität des Kraftfahrzeugführers bestimmt und die Warnung um ein vorgegebenes Zeitintervall ausgesetzt, wenn die erkannte Aktivität des Kraftfahrzeugführers eine vorgegebene Schwelle überschreitet, d.h. als ausreichend erkannt wird.

Vorzugsweise wird die Aktivität des Kraftfahrzeugführers anhand des Lenkwinkels und/oder der Lenkwinkelgeschwindigkeit bestimmt. Insbesondere wird die Warnung unterdrückt, wenn der Lenkwinkel größer als ein vorgegebener erster Winkelwert ist oder es wird die Warnung für ein vorgegebenes Zeitintervall ausgesetzt, wenn der Lenkwinkel größer als ein vorgegebener zweiter Winkelwert ist. Vorzugsweise beträgt der erste Winkelwert 10° und der zweite Winkelwert 45°.

In einer weiteren bevorzugten Ausführungsform des Verfahrens wird die Warnung für ein vorbestimmtes Zeitintervall ausgesetzt, wenn die Lenkwinkelgeschwindigkeit größer als vorgegebener Geschwindigkeitswert ist, der insbesondere 20°/s beträgt.

In einer weiteren bevorzugten Ausführungsform wird die Warnung für ein vorgegebenes Zeitintervall unterdrückt, wenn die Fahrspurerkennung detektiert, daß sich das Fahrzeug einer Fahrspurbegrenzung nähert und der Kraftfahrzeugführer eine Lenkbewegung ausführt, die das Fahrzeug wieder in die Fahrspur zurückbringt. Insbesondere beträgt das vorgegebene Zeitintervall 1 bis 5 Sekunden.

In einer weiteren bevorzugten Ausführungsform wird die Aktivität des Fahrers aus der Gaspedalstellung bestimmt, wobei insbesondere auf eine ausreichende Aktivität des Fahrers geschlossen wird, wenn die Gaspedalgeschwindigkeit mindestens 150 % / s beträgt.

In einer weiteren bevorzugten Ausführungsform ist eine ausreichende Aktivität des Fahrers gegeben, wenn eine Betätigung der Bremse erfolgt. Insbesondere liegt mit einer Aktivierung des Bremslichtschalters eine ausreichende Aktivität des Fahrers vor.

Eine erfindungsgemäße Vorrichtung zur Durchführung des oben geschilderten Verfahrens ist in Anspruch 14 definiert.

Bevorzugte Ausführungsformen der Erfindung werden nachfolgend anhand der einzigen Zeichnung beschrieben.

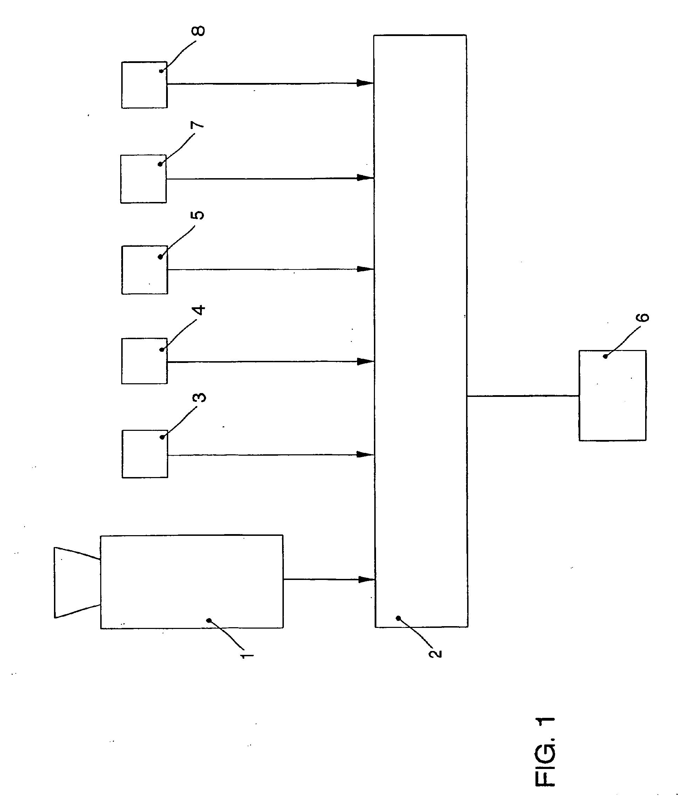

- Fig. 1: zeigt eine Vorrichtung zur Überwachung eines Kraftfahrzeugführers unter Verwendung einer Fahrspurerkennung in schematischer Darstellung.

Fig. 1 zeigt eine Vorrichtung zur Überwachung eines Kraftfahrzeugführers mit einer zur Straße ausgerichteten Kamera 1, die zur Erfassung von Fahrspurmarkierungen dient, einer Auswerteeinheit 2 zur Erkennung einer Fahrspurabweichung, einem Gierratensensor 3, einem Lenkwinkelsensor 4, einem Navigationssystem 5 und einem Signalgeber 6 zur Erzeugung eines Warnsignals. Mittels der Signale des Gierratensensors 3, des Navigationssystems 5 und des Lenkwinkelsensors 4, die in die Auswerteeinheit 2 einfließen, kann die Erkennungsschärfe der Fahrspurerkennung verbessert werden. Ferner wird in der Auswerteeinheit aus den eingegangenen Signalen die Lenkgeschwindigkeit als zeitliche Ableitung des Lenkwinkelsignals und die Aktivität des Fahrers bestimmt.

In der Praxis hat sich gezeigt, daß bei den bekannten Systemen zur Fahrspurerkennung viele Fehlwarnungen auftreten. Zur Vermeidung derartiger Fehlwarnungen ist der grundlegende Gedanke der Erfindung, daß eine Aktivitätsdetektion des Fahrers durchgeführt wird und eine Warnung an den Fahrer unterbleibt, falls eine ausreichende Aktivität des Fahrers festgestellt wird. In diesem Fall wird geschlußfolgert, daß der Fahrer die Richtung seines Fahrzeugs absichtlich und wissentlich geändert hat.

Eine ausreichende Aktivität des Fahrers wird daher oberhalb bestimmter Lenkwinkel angenommen, da in diesem Fall der Fahrer ausreichend aufmerksam ist und das Fahrzeug wissentlich lenkt. Folglich wird in diesem Fall die Warnung der Fahrspurerkennung unterdrückt oder für ein vorgegebenes Zeitintervall ausgesetzt.

Stellt der Fahrer einen Lenkwinkel von größer als 10° ein, so lenkt der Fahrer absichtlich eine Kurve und braucht nicht gewarnt zu werden. Dabei ist der Wert von 10° nur als Beispiel zu werten, da der Grenzwert vom Fahrzeug, von der Straßenart und der Lenkwinkelübersetzung abhängt. Der Wert von 10° gilt für eine Oberklassenlimousine auf der Autobahn. Ferner liegt der Wert für einen LKW deutlich höher.

Lenkt der Fahrer einen sehr großen Lenkwinkel, beispielsweise größer als 45°, so wird mit einem Nachlauf von maximal 5 Sekunden die Warnung der Fahrspurerkennung unterdrückt. Dies ist besonders hilfreich auf Autobahnauffahrten, da hier zuerst eine enge Kurve mit großen Lenkwinkeln gefahren wird und dann der Fahrer auf die Autobahn mit einem Fahrspurwechsel auffährt.

Ferner kann angenommen werden, daß der Fahrer aufmerksam ist, wenn er mit einer vorgegebenen Geschwindigkeit lenkt. Mit anderen Worten, für Lenkwinkelgeschwindigkeiten oberhalb von 20°/s wird für ein vorgegebenes Zeitintervall, beispielsweise 2 Sekunden, die Warnung unterdrückt. Auch dieser Wert von 20°/s ist fahrzeugbezogen.

Weiterhin wird die Warnung der Fahrspurerkennung für 1 bis 5 Sekunden unterdrückt, wenn der Fahrer sich einer Fahrspurbegrenzung nähert und eine Lenkbewegung ausführt, die ihn wieder zurück in die eigene Fahrspur führt, d.h. eine Lenkbewegung in Gegenrichtung. Nähert sich also das Fahrzeug beispielsweise der linken Fahrspurbegrenzung, und führt der Fahrer eine Lenk bewegung in Uhrzeigerrichtung aus, so wird die Warnung für eine vorgegebene Zeit unterdrückt.

Bei besonders engen Fahrspuren, beispielsweise in Baustellen oder auf engen Landstraßen, ist der Fahrer in der Regel besonders aufmerksam. Daher wird die Warnung der Fahrspurerkennung bei engen Fahrspuren, beispielsweise bei einer Fahrspurbreite von weniger als 2,3m, unterdrückt. Ferner wird die Warnung der Fahrspurerkennung bei sehr breiten Fahrspuren ebenfalls unterdrückt. Der Begriff "sehr breit" umfaßt in diesem Zusammenhang auch nicht erkannte Fahrbahnmarkierungen, nicht erkannte Fahrspuren aufgrund mangelnden Kontrasts oder schlechter Witterung etc., da die Fahrspurerkennung in diesem Fall keine Breite der Fahrspur ermitteln kann, so daß die fiktive Breite der Fahrspur größer als die mögliche Detektionsbreite der Fahrspurerkennung ist und fiktiv gegen Unendlich geht.

Ferner wird auf eine ausreichende Aktivität des Fahrers geschlossen, wenn der Fahrer weit außerhalb der von der Fahrspurerkennung erkannten Fahrspurmitte fährt. In diesem Fall kann angenommen werden, daß der Fahrer absichtlich eine Fahrspur gewählt hat. So wird beispielsweise die Warnung der Fahrspurerkennung unterdrückt, wenn der Fahrzeugmittelpunkt sich mehr als ein vorgegebener Abstand, beispielsweise 1,5 Meter, von der Fahrspurmitte befindet.

Es wird auch auf eine ausreichende Aktivität des Fahrers in Fällen geschlossen, wenn der Fahrer durch ein Manöver, das eine Unterdrückung der Warnung hervorruft, die Fahrspurbegrenzungslinie bereits überschritten hat bzw. überschreitet. In diesem Fall wird weiterhin die Warnung der Fahrspurerkennung unterdrückt, solange die Fahrspurbegrenzung sich zwischen den beiden Außenkanten des Fahrzeugs befindet.

### Beispiel 1:

Lenkt der Fahrer stark, so wird die Warnunterdrückung für beispielsweise 2 Sekunden aktiv. Überschreitet das Fahrzeug innerhalb der Warnunterdrückung die Fahrspurbegrenzung, beispielsweise um auf eine andere Fahrspur zu wechseln, so bleibt die Warnunterdrückung weiterhin aktiv, obwohl das Zeitintervall für die Warnunterdrückung durch starkes Lenken abgelaufen ist. Folglich erfolgt keine Warnung bei einem Fahrspurwechsel.

### Beispiel 2:

Der Fahrer lenkt in eine Baustelle und verläßt die weiß markierten Linien, um den gelb markierten Linien zu folgen. Er hat dann eine weiße Linie zwischen den Außenkanten des Fahrzeugs, wobei das Fahrspurerkennungssystem aber weiterhin die kontrastreiche weiße Linie erkennt. Die Warnung wird in diesem Beispiel daher dauerhaft unterdrückt, solange der Fahrer die weiße Linie zwischen den Außenkanten seines Fahrzeugs hat. Mit anderen Worten, die Warnung der Fahrspurerkennung wird bei doppelt gekennzeichneten Fahrspuren (weiß - gelb) unterdrückt.

Auch aus dem Kreuzungswinkel des Fahrzeugs bei Überfahren der Fahrspurbegrenzungslinie kann auf die Aktivität des Fahrers geschlossen werden. Bei Unaufmerksamkeit, Abgelenktheit oder Einschlafen (Müdigkeit) des Fahrers wird die Begrenzungslinie der Fahrspur mit einem kleinen Kreuzungswinkel überquert. Bei Kreuzungswinkeln größer als ein vorgegebener Querungswinkel, beispielsweise 0,8°, wird die Warnung der Fahrspurerkennung unterdrückt.

Ferner wird auf eine ausreichende Aktivität des Fahrers bei einer schnellen Betätigung des Gaspedals geschlossen. Es wird dann ebenfalls die Warnung mit einer Nachlaufzeit unterdrückt bzw. ausgesetzt, da der Fahrer offensichtlich ein Fahrmanöver, wie beispielsweise ein Überholmanöver, plant.

Aus der Betätigung der Bremse kann auch auf eine ausreichende Aktivität des Fahrers geschlossen werden, so daß auch in diesem Fall eine Warnunterdrückung oder eine Aussetzung der Warnung für eine vorgegebene Zeit erfolgt.

### BEZUGSZEICHENLISTE

- 1: Kamera
- 2: Auswerteeinheit
- 3: Gierratensensor
- 4: Lenkwinkelsensor
- 5: Navigationssystem
- 6: Signalgeber
- 7: Gaspedal
- 8: Bremslichtschalter

## Patentansprüche

1. Verfahren zur Überwachung eines Kraftfahrzeugführers unter Verwendung einer Fahrspurerkennung, wobei eine Warnung an den Kraftfahrzeugführer ausgegeben wird, wenn die Fahrspurerkennung eine kritische Fahrsituation detektiert, und wobei die Aktivität des Kraftfahrzeugführers bestimmt wird,
**dadurch gekennzeichnet, dass**
die Warnung um ein vorgegebenes Zeitintervall ausgesetzt wird, wenn die erkannte Aktivität des Kraftfahrzeugführers eine vorgegebene Schwelle überschreitet.

2. Verfahren nach Anspruch 1, **dadurch gekennzeichnet, dass** die Aktivität des Kraftfahrzeugführers anhand des Lenkwinkels und/oder der Lenkwinkelgeschwindigkeit bestimmt wird.

3. Verfahren nach Anspruch 2, **dadurch gekennzeichnet, dass** die Warnung unterdrückt wird, wenn der Lenkwinkel größer als ein vorgegebener erster Winkelwert ist, oder die Warnung für das vorgegebene Zeitintervall ausgesetzt wird, wenn der Lenkwinkel größer als ein vorgegebener zweiter Winkelwert ist.

4. Verfahren nach Anspruch 3, **dadurch gekennzeichnet, dass** der erste Winkelwert 10° beträgt.

5. Verfahren nach Anspruch 3, **dadurch gekennzeichnet, dass** der zweite Winkelwert 45° beträgt.

6. Verfahren nach Anspruch 2, **dadurch gekennzeichnet, dass** die Warnung für ein vorbestimmtes Zeitintervall ausgesetzt wird, wenn die Lenkwinkelgeschwindigkeit größer als ein vorgegebener Geschwindigkeitswert ist.

7. Verfahren nach Anspruch 6, **dadurch gekennzeichnet, dass** der vorgegebene Geschwindigkeitswert 20°/sec beträgt.

8. Verfahren nach Anspruch 2, **dadurch gekennzeichnet, dass** die Warnung für ein vorgegebenes Zeitintervall unterdrückt wird, wenn die Fahrspurerkennung detektiert, daß sich das Fahrzeug einer Fahrspurbegrenzung nähert und der Kraftfahrzeugführer eine Lenkbewegung ausführt, die das Fahrzeug wieder in die Fahrspur zurückbringt.

9. Verfahren nach Anspruch 8, **dadurch gekennzeichnet, dass** das vorgegebene Zeitintervall 1 bis 5 Sekunden beträgt.

10. Verfahren nach Anspruch 1, **dadurch gekennzeichnet, dass** die Aktivität des kraftfahrzeugführers aus der Gaspedalstellung bestimmt wird.

11. Verfahren nach Anspruch 10, **dadurch gekennzeichnet, dass** die Gaspedalgeschwindigkeit mindestens 150 % / s beträgt.

12. Verfahren nach Anspruch 1, **dadurch gekennzeichnet, dass** eine ausreichende Aktivität des kraftfahrzeugführers gegeben ist, wenn eine Betätigung der Bremse erfolgt.

13. Verfahren nach Anspruch 12, **dadurch gekennzeichnet, dass** mit einer Aktivierung des Bremslichtschalters eine ausreichende Aktivität des kraftfahrzeugführers vorliegt.

14. Vorrichtung zur Durchführung des Verfahrens nach einem der vorangegangenen Ansprüche mit einer Kamera (1) zur Detektion von Fahrspurmarkierungen, einer Auswerteeinheit (2) und einer Warnsignaleinrichtung (6).

15. Vorrichtung nach Anspruch 14, **dadurch gekennzeichnet, dass** die Vorrichtung ferner einen Lenkwinkelsensor (4) aufweist.

## Claims

1. Method for monitoring a motor vehicle driver using a lane detection means, a warning being issued to the motor vehicle driver if the lane detection means detects a critical driving situation, the activity of the motor vehicle driver being determined, **characterized in that** the warning is suspended for a predefined time interval if the detected activity of the motor vehicle driver exceeds a predefined threshold.

2. Method according to Claim 1, **characterized in that** the activity of the motor vehicle driver is determined by reference to the steering angle and/or the steering angle speed.

3. Method according to Claim 2, **characterized in that** the warning is suppressed if the steering angle is greater than a predefined first angle value or the warning is suspended for the predefined time interval if the steering angle is greater than a predefined second angle value.

4. Method according to Claim 3, **characterized in that** the first angle value is 10°.

5. Method according to Claim 3, **characterized in that** the second angle value is 45°.

6. Method according to Claim 2, **characterized in that** the warning is suspended for a predetermined time interval if the steering angle speed is greater than a predefined speed value.

7. Method according to Claim 6, **characterized in that** the predefined speed value is 20°/sec.

8. Method according to Claim 2, **characterized in that** the warning is suppressed for a predefined time interval if the lane detection means detects that the vehicle is approaching a lane boundary and the motor vehicle driver carries out a steering movement which returns the vehicle to the lane.

9. Method according to Claim 8, **characterized in that** the predefined time interval is 1 to 5 seconds.

10. Method according to Claim 1, **characterized in that** the activity of the motor vehicle driver is determined from the position of the accelerator pedal.

11. Method according to Claim 10, **characterized in that** the speed of the accelerator pedal is at least 150%/s.

12. Method according to Claim 1, **characterized in that** sufficient activity of the motor vehicle driver is occurring if the brake is activated.

13. Method according to Claim 12, **characterized in that** sufficient activity of the motor vehicle driver is occuring when the brake light switch is activated.

14. Device for carrying out the method according to one of the preceding claims, having a camera (1) for detecting lane markings, an evaluation unit (2) and a warning signal device (6).

15. Device according to Claim 14, **characterized in that** the device also has a steering angle sensor (4).

## Revendications

1. Procédé pour la surveillance d'un conducteur de voiture qui utilise un système de reconnaissance de voie, une mise en garde étant arrêtée à l'intention du conducteur de voiture lorsque le système de reconnaissance de voie détecte une situation de conduite dangereuse, et l'activité du conducteur de voiture étant déterminée, **caractérisé en ce que** la mise en garde est arrêtée pendant un intervalle de temps prédéfini, lorsque l'activité reconnue du conducteur de voiture dépasse un seuil prédéfini.

2. Procédé selon la revendication 1, **caractérisé en ce que** l'activité du conducteur de voiture est définie à l'aide de l'angle de braquage et/ou de la vitesse de l'angle de braquage.

3. Procédé selon la revendication 2, **caractérisé en ce que** la mise en garde est supprimée lorsque l'angle de braquage est supérieur à une première valeur de braquage prédéfinie, ou que la mise en garde est arrêtée pour l'intervalle de temps prédéfini lorsque l'angle de braquage est supérieur à un deuxième angle de braquage prédéfini.

4. Procédé selon la revendication 3, **caractérisé en ce que** le premier angle de braquage est de 10°.

5. Procédé selon la revendication 3, **caractérisé en ce que** le deuxième angle de braquage est de 45°.

6. Procédé selon la revendication 2, **caractérisé en ce que** la mise en garde est arrêtée pour un intervalle de temps prédéfini lorsque la vitesse d'angle de braquage est supérieure à une valeur de vitesse prédéfinie.

7. Procédé selon la revendication 6 **caractérisé en ce que** la valeur de vitesse prédéfinie est de 20°/sec.

8. Procédé selon la revendication 2, **caractérisé en ce que** la mise en garde est supprimée pour un intervalle de temps prédéfini, lorsque le système de reconnaissance de voie détecte que le véhicule se rapproche d'une limite de voie et le conducteur de la voiture exécute un mouvement de braquage qui remet le véhicule sur la voie.

9. Procédé selon la revendication 8, **caractérisé en ce que** l'intervalle de temps est compris entre 1 à 5 secondes.

10. Procédé selon la revendication 1, **caractérisé en ce que** l'activité du conducteur de la voiture est déterminée à partir de la position de la pédale d'accélérateur.

11. Procédé selon la revendication 10, **caractérisé en ce que** la vitesse de la pédale d'accélérateur est au moins de 150 % / s.

12. Procédé selon la revendication 1, **caractérisé en ce qu'**une activité suffisante du conducteur de la voiture est donnée lorsqu'un actionnement du frein est réalisé.

13. Procédé selon la revendication 12, **caractérisé en ce qu'**une activité suffisante du conducteur de la voiture existe avec l'activation du commutateur des feux stop.

14. Dispositif de réalisation du procédé selon l'une des revendications précédentes, au moyen d'une caméra (1) pour la détection des marquages sur la voie, d'une unité d'évaluation (2) et d'un appareil de signalisation de mise en garde (6).

15. Dispositif selon la revendication 14, **caractérisé en ce que** le dispositif possède par ailleurs un capteur d'angle de braquage (4).
